# EUROPEAN PATENT APPLICATION

(11) **EP 4 439 307 A1**
(43) Date of publication of application: **02.10.2024**
(21) Application number: 23219967.9
(22) Date of filing: 22.12.2023
(51) Int. Cl.: G06F 11/34, G06F 11/30, G06F 17/40

(54) **LOG SUBSYSTEM, LOG SYSTEM, VEHICLE LOG SYSTEM, AND VEHICLE**

(30) Priority: 31.03.2023 CN 202310355634
(71) Applicant: Nio Technology (Anhui) Co., Ltd, Hefei City, Anhui 230611 (CN)
(72) Inventor: WANG, Mingwei, Hefei City, Anhui (CN)
(74) Representative: Vossius & Partner Patentanwälte Rechtsanwälte mbB

(57) **Abstract**

The disclosure relates to the field of computer technologies, and specifically provides a log subsystem, a log system, a vehicle log system, and a vehicle, to solve a problem of how to improve performance and flexibility of the log subsystem, reduce system resource occupation, and extend log data applications. To this end, the log subsystem of the disclosure includes a log generation module, a log processing module, and a log output module. Each module runs in a program process, so that system resource occupation is reduced, and performance of the log subsystem is improved. A log output unit designed based on two stages of buffers, two threads, and two modes of wake-up and wait can not only improve log output performance but also avoid causing additional system resource costs. In addition, cross-machine log fusion of log data in a plurality of log subsystems is implemented using another mature open source logging framework, so that a developer can obtain stronger data support, which is conducive to acceleration of system development.

## Description

The present application claims priority of CN patent application 202310355634.8 filed on March 31, 2023 with the title "Log subsystem, log system, vehicle log system and vehicle".

### Technical Field

The disclosure relates to the field of computer technologies, and specifically provides a log subsystem, a log system, a vehicle log system, and a vehicle.

### Background Art

A log plays an important role in system development, and a developer/tester usually records a running status of a system using a large number of log interfaces. However, various resources in the system are valuable, and a log subsystem with low efficiency may become a bottleneck in running of the entire system. Therefore, each time performance of the log subsystem is improved, efficiency of invoking the log subsystem each time may be improved, and performance of the entire system may be gradually greatly improved.

In addition, in a system debugging phase, the developer expects that a log data output mode may be flexibly changed, and cross-machine log fusion of log data in a plurality of log subsystems may be implemented using another excellent open source logging framework, to obtain strong data support and accelerate system development. Therefore, how to improve the performance and the flexibility of the log subsystem, reduce system resource occupation, and extend log data applications has become a problem urgently to be solved.

Accordingly, there is a need for a novel solution to solve the foregoing problem in the art.

### Summary

The disclosure aims to solve or partially solve the foregoing technical problem, that is, how to improve performance and flexibility of a log subsystem, reduce system resource occupation, and extend log data applications.

Solution 1: In a first aspect, the disclosure proposes a log subsystem, including:
a log generation module including one or more log generators, the log generator generating a log event;
a log processing module configured to perform the following operations:
   adding basic log information to the log event to generate log data, and
   configuring a log output unit based on a log output configuration file and/or a log output change interface; and
   a log output module including one or more log output units, the log output unit including any one of a basic log output unit, an extended log output unit, and a third-party log output unit.

The log generation module, the log processing module, and the log output module are set to run in a same program process.

Solution 2: In an implementation of the foregoing log subsystem, the basic log output unit includes a front-end unit, a first buffer, a second buffer, and a back-end unit, and the basic log output unit is configured to perform the following operations:
after the log subsystem starts running, the back-end unit being configured to enter a wait state;
the front-end unit being configured to perform the following operations:
   writing the log data into the first buffer; and
   when a log count of the first buffer is equal to a first data volume threshold, writing all the log data in the first buffer into the second buffer, and waking up the back-end unit; and
   after the back-end unit is woken up, the back-end unit being configured to perform the following operations:
      outputting all the log data in the second buffer in a preset output mode; and
      entering the wait state again.

The solution of the basic log output unit of the disclosure has the beneficial effects as follows: A two-stage buffer design can reduce IO operations of a disk, which not only improves log output performance but also protects the disk. In addition, the front-end unit and the back-end unit run in two threads of a same program process, and the front-end unit can wake up the back-end unit to start working by performing intra-process communication only once, so that the log output performance is improved without causing additional system resource costs. Moreover, a back-end thread in which the back-end unit is located is in the wait state by default, so that a system resource is further saved.

Solution 3: In an implementation of the foregoing log subsystem, the output mode includes a file output mode and a console output mode.

When the output mode is set to the file output mode, the basic log output unit is set to a file log output unit.

When the output mode is set to the console output mode, the basic log output unit is set to a console log output unit.

Solution 4: In an implementation of the foregoing log subsystem, after the log subsystem runs, the log processing module performs at least one of the following operations by invoking the log output change interface:
disabling a log output unit that runs;
enabling a log output unit that does not run;
setting an output mode of the basic log output unit; and
changing the output mode of the basic log output unit.

Solution 5: In an implementation of the foregoing log subsystem, the log subsystem further includes:
the log processing module is set in a singleton pattern.

The third-party log output unit includes a DLT log output unit.

The extended log output unit includes an abstract base class for extending a log data application.

The basic log information includes at least one of a source file name, a code line count, a time stamp, and a PID of the log event.

Solution 6: In a second aspect, the disclosure proposes a log system, including an application end and a log fusion end.

The application end includes the log subsystem according to any one of Solutions 1 to 5 and a DLT daemon. There is one or more log subsystems. A log output module of each log subsystem includes a DLT log output unit. The DLT daemon is configured to obtain log data of the log subsystem through the DLT log output unit.

The log fusion end includes a DLT client configured to obtain the log data of the log subsystem of the application end through the DLT daemon.

There is one or more application ends and one or more log fusion ends.

Solution 7: In an implementation of the foregoing log system, the log system further includes:
the log fusion end is configured to send a log output change instruction to the log subsystem through the DLT client, the DLT daemon, and the DLT log output unit.

The log subsystem performs at least one of the following operations in response to the log output change instruction:
disabling a log output unit that runs;
enabling a log output unit that does not run;
setting an output mode of a basic log output unit; and
changing the output mode of the basic log output unit.

According to the disclosure, a preset log output unit can be enabled or disabled in a plurality of manners such as a log output configuration file, a log output change interface, and a log output change instruction, so that a user can customize and flexibly select a proper log data output mode.

Solution 8: In a third aspect, the disclosure proposes a vehicle log system, provided with the log system according to Solution 6 or 7.

Solution 9: In an implementation of the foregoing vehicle log system, the application end is a vehicle domain controller, and the log fusion end is a vehicle central controller and/or a cloud server.

Solution 10: In a fourth aspect, the disclosure proposes a vehicle, provided with the log subsystem according to any one of Solutions 1 to 5, or
the log system according to Solution 6 or 7, where the application end in the log system is a vehicle domain controller, and the log fusion end is a vehicle central controller.

The log system of the disclosure implements cross-machine log fusion of log data in a plurality of log subsystems using another excellent open source logging framework, so that a developer can obtain strong data support, which is conducive to acceleration of system development.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure.
FIG. 1 is a schematic diagram of a compositional structure of a log subsystem according to an embodiment of the disclosure;
FIG. 2 is a schematic diagram of a compositional structure of a basic log output unit according to an embodiment of the disclosure;
FIG. 3 is a flowchart of main working steps of a basic log output unit according to an embodiment of the disclosure; and
FIG. 4 is a schematic diagram of a compositional structure of a log system according to an embodiment of the disclosure.

### Detailed Description of Embodiments

To make the objectives, technical solutions, and advantages of embodiments of the disclosure clearer, the technical solutions in the embodiments of the disclosure will be clearly and completely described below with reference to the accompanying drawings. Apparently, the described embodiments are some of, rather than all of, the embodiments of the disclosure. All other embodiments obtained by those of ordinary skill in the art based on the embodiments of the disclosure without creative efforts shall fall within the protection scope of the disclosure.

Those skilled in the art should understand that these implementations are only used to explain the technical principles of the disclosure, and are not intended to limit the scope of protection of the disclosure. Those skilled in the art can make adjustments on these implementations as required, to adapt to specific application scenarios.

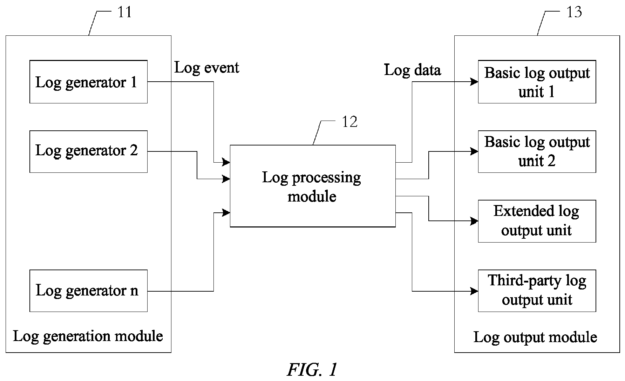

First, referring to FIG. 1, FIG. 1 is a schematic diagram of a compositional structure of a log subsystem according to an embodiment of the disclosure. As shown in FIG. 1, the log subsystem of the disclosure includes a log generation module 11, a log processing module 12, and a log output module 13.

Preferably, the log generation module 11, the log processing module 12, and the log output module 13 are set to run in an application process, to reduce system resource occupation and improve performance of the log subsystem.

In this embodiment of the disclosure, the log subsystem is encapsulated into a log subsystem library file, and the log subsystem library file may be invoked to use the log subsystem of the disclosure for a source file involved in a specific application process.

The log subsystem library file includes a log generation interface function. The log generation interface function may be invoked for different source files and any code line of a same source file. Accordingly, the log generation interface function is invoked at positions of different code lines in each source file, to form a log generator.

Accordingly, the log generation module 11 includes one or more log generators. During program running, each time the log generation interface function is invoked, the log generation module 11 generates a log event.

The log processing module 12 is configured to be responsible for obtaining each log event in the log generation module 11, and then adding basic log information of the log event, for example, a source file name, a code line count, a time stamp, and a PID, to the log event, to generate log data in the disclosure.

In addition, the log processing module 12 may further determine, based on a log output configuration file and/or a log output change interface, which log output unit in the log output module 13 is to be used to output the log data.

According to the disclosure, the log processing module 12 is designed in a singleton pattern, so that there is only one instantiated object in each process. This can save a memory resource and ensure consistency of the log data.

It should be noted that adding the information such as the source file name, the code line count, and the time stamp to the log event can distinguish which line of program code in which source file each log event is generated for and when the log event is generated. Adding the PID can distinguish a program process in which the log subsystem generates the log event during subsequent log data fusion processing.

Based on a structure and a function of the log output unit, the log output unit in the log output module 13 may be classified as three types: a basic log output unit, an extended log output unit, and a third-party log output unit.

According to a user requirement, when the log subsystem library file is generated, the log output module 13 may include one or more of the three types of log output units. There may be one or more log output units of each type.

In this embodiment of the disclosure, as shown in FIG. 1, the log output module 13 includes two basic log output units, one extended log output unit, and one third-party log output unit.

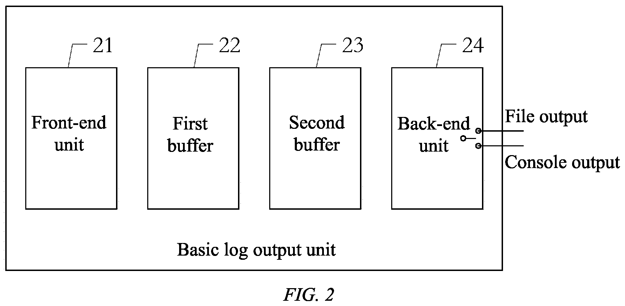

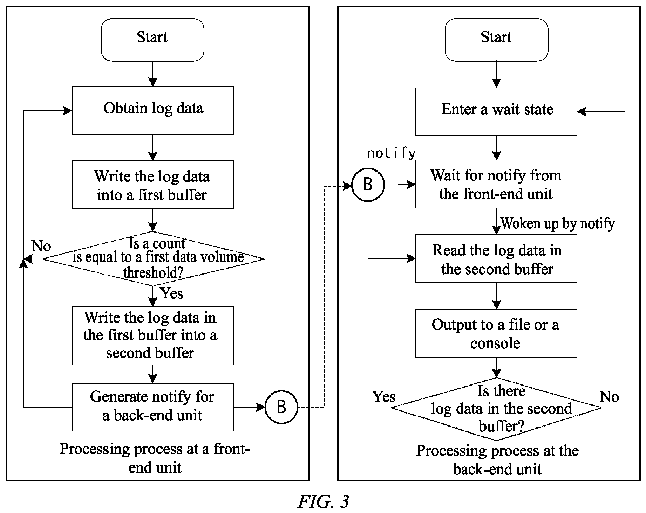

According to different output modes, the basic log output unit is further classified as a file log output unit and a console log output unit. A structure and a main working step process of the basic log output unit are described below with reference to FIG. 2 and FIG. 3.

FIG. 2 is a schematic diagram of a compositional structure of the basic log output unit according to an embodiment of the disclosure. The basic log output unit includes a front-end unit 21, a first buffer 22, a second buffer 23, and a back-end unit 24. The back-end unit 24 performs corresponding file output or console output based on an output mode set by the user.

When the output mode is set to the file output mode, the basic log output unit is the file log output unit; or when the output mode is set to the console output mode, the basic log output unit is the console log output unit.

Further referring to FIG. 3, FIG. 3 is a flowchart of main working steps of the basic log output unit according to an embodiment of the disclosure.

Preferably, the front-end unit 21 and the back-end unit 24 are designed to run in two threads, respectively. Accordingly, the front-end unit 21 runs in a front-end thread, and the back-end unit 24 runs in a back-end thread.

After the log subsystem is started, the front-end thread remains in a working state, and the back-end thread enters a wait state and can be woken up (notify) by another program.

The front-end unit 21 obtains the log data from the log processing module 12, and stores the log data into the first buffer 22. When a log count of the first buffer 22 is equal to a first data volume threshold, the front-end unit 21 writes all the log data in the first buffer 22 into the second buffer 23, and resets the log count of the first buffer 22 to zero to restart counting.

As an example, the first data volume threshold is set to a maximum data capacity of the first buffer 22. To be specific, after the first buffer 22 is overwritten, the front-end unit 21 writes all the log data in the first buffer 22 into the second buffer 23, and clears the first buffer 22. Those skilled in the art may alternatively set the first data volume threshold to another numerical value less than a maximum data capacity of the first buffer 22 according to an actual situation.

In addition, the front-end unit 21 generates a notify signal, and sends the notify signal to the back-end thread to wake up the back-end unit 24 to start working.

After woken up, the back-end unit 24 reads the log data in the second buffer 23, and outputs the log data to one or more specified files or to a specified console through an IO operation based on the output mode set by the user.

After all the log data in the second buffer 23 is output, the back-end thread enters the wait state again, waiting to be woken up by the front-end unit 21 next time.

Preferably, a data structure in the second buffer 23 is designed into a queue, and a type of an element in the queue is a data type of the log data in the first buffer 22. To be specific, the data in the second buffer 23 is a data set of one or more first buffers 22.

It should be noted that when the back-end unit 24 reads and outputs the log data in the second buffer 23, if the first buffer 22 is overwritten again, the front-end unit 21 continues to add all log data in the first buffer 22 to the second buffer 23.

In this case, the second buffer 23 includes the log data of the first buffer 22 added this time and the log data of the first buffer 22 written before. The back-end unit 24 enters the wait state again only after outputting all of the log data added this time and the log data written before in the second buffer 23.

A two-stage buffer design in the disclosure can reduce IO operations of a disk, which not only improves log output performance but also protects the disk.

In addition, the front-end unit 21 and the back-end unit 24 run in a same program process, and the front-end unit 21 can wake up the back-end unit 24 to start working by performing intra-process communication only once. Therefore, according to the method of the disclosure, the log output performance is improved without causing additional system resource costs. Moreover, the back-end thread in which the back-end unit 24 is located is in the wait state by default, so that a system resource is further saved.

Further referring to Table 1, Table 1 shows a performance test comparison result between the console log output unit of the disclosure and a log output unit of Google glog known for simplicity and high performance.

**Table 1 Performance test comparison result between console log output units of the disclosure and Google glog**

| | CPU Usage (%) | CPU Usage (DMIPS) | Memory Usage (KB) | Total Time (µs) | Time Spent Each Time (µs) |
|---|---|---|---|---|---|
| The disclosure | 5.0 | 1296 | 5752 | 604679991 | 120.93 |
| Google glog | 5.3 | 1373 | 7928 | 633849000 | 126.77 |

A specific test environment is as follows: a performance test is performed on a Horizon Journey 5 chip (total computing power of a CPU is about 25.92 K DMIPS, and a total memory is about 4889.4 MiB), a test scenario is console output, there is a 1-microsecond dormancy after a log is output, and operations are repeated for 5000000 times.

It can be learned from Table 1 that the performance of the console log output unit of the disclosure is higher than that of the log output unit of Google glog from evaluation indexes such as memory resource usage, CPU resource usage, and running time.

The extended log output unit includes an abstract base class for extending a log data application. Another user may implement an abstract interface in the abstract base class, that is, implement a log output unit, by inheriting the base class. Therefore, the user is allowed to develop a log output unit that meets a requirement of the user better.

Preferably, the third-party log output unit is DLT log with a powerful cross-machine log fusion function. Those skilled in the art may alternatively select another logging framework, for example, the log output unit of Google glog, as the third-party log output unit according to an actual situation.

After the user determines a log application requirement, a specific log output unit may be selected, from all log output units of the log output module 13 already encapsulated in the log subsystem library file, to be enabled or disabled through the log output configuration file and/or the log output change interface of the log subsystem library file.

In this embodiment of the disclosure, when the log subsystem is started, the log processing module 12 configures a required log output unit by reading the log output configuration file.

Content of the log output configuration file generally includes a log output unit that needs to be enabled. When an enabled log output unit includes the basic log output unit, the output mode of the basic log output unit further needs to be specified. Further, when the output mode is the file output mode, related parameters such as a log file storage location and a log file name may further be set; and when the output mode is the console output mode, related parameters such as an address of a console may further be set.

In a running process of the log subsystem, the user may invoke the log output change interface in an application (a specified code line of a source file) according to a requirement, so that the log processing module 12 performs one or more of the following operations: disabling a log output unit that runs; enabling a log output unit that does not run; setting the output mode of the basic log output unit; and changing the output mode of the basic log output unit and the like.

As an example, the log output module 13 encapsulated in the log subsystem library file includes two basic log output units, one extended log output unit, and one DLT log output unit.

The log output configuration file includes enabling the extended log output unit, enabling the DLT log output unit, and enabling a basic log output unit 1, where an output mode of the basic log output unit 1 is file output, a log file storage location is under a root directory of Disk D, and a log file name is a.log.

After the log subsystem runs, the log processing module 12 loads a corresponding log output unit in the log output module 13 based on the log output configuration file. In this case, the log output module 13 includes three log output units: one file log output unit, one extended log output unit, and one DLT log output unit.

When the application runs code in the 100^{th} line of a source file B, a function of the code in this line is to invoke the log output change interface, disable the extended log output unit, and enable a basic log output unit 2. An output mode of the basic log output unit 2 is console output. Console related parameters include: enabling a serial port 3, a baud rate of 57600 bps, and the like.

After completing executing the code in the 100^{th} line of the source file B, the log processing module 12 disables the extended log output unit that runs, enables the basic log output unit 2 that does not run, and sets the output mode of the basic log output unit 2 to console output. In this case, the log output module 13 includes three log output units: one file log output unit, one console output unit, and one DLT log output unit.

In another embodiment, the user does not set the log output configuration file, and in code of a related source program of the log subsystem, the log output change interface is invoked to enable or disable one or more log output units in the log output module 13 in the log subsystem library file or reset an enabled file log output unit to a console log output unit.

Further, the disclosure further provides a log system. The log system includes one or more application ends and one or more log fusion ends.

Each application end includes one or more foregoing log subsystems and one DLT daemon. A log output module of each log subsystem is configured with a DLT log output unit. Each DLT log output unit is connected to the DLT daemon of the application end.

Each log fusion end includes a DLT client. Each DLT client is connected to the DLT daemon or DLT daemons of the one or more application ends based on a user setting. The log fusion end obtains log data of each log subsystem through the DLT client, the DLT daemon, and the DLT log output unit.

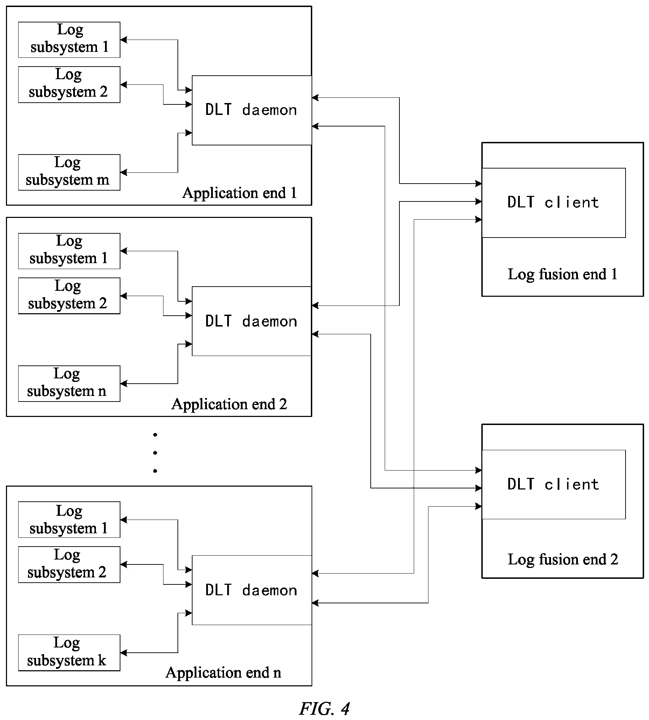

FIG. 4 is a schematic diagram of a main structure of the log system according to an embodiment of the disclosure. As shown in FIG. 4, the log system according to this embodiment of the disclosure mainly includes n application ends (an application end 1, an application end 2, ..., and an application end n) and two log fusion ends.

The application end 1 includes m foregoing log subsystems. A log output module of each log subsystem is configured with a third-party log output unit: a DLT log output unit. Each DLT log output unit is connected to a DLT daemon in the application end 1.

Compositional structures of the other application ends in the log system shown in FIG. 4 are the same as that of the application end 1, and details are not described herein again.

It should be noted that there may be different numbers of log subsystems in the application ends according to different numbers of application processes in the application ends. For example, the application end 2 includes n log subsystems, and the application end n includes k log subsystems.

The DLT daemon of each application end is connected to a DLT client of a log fusion end 1 and a DLT client of a log fusion end 2. The log fusion end 1 and the log fusion end 2 may obtain, through the DLT clients, the DLT daemons, and the DLT log, log data of log subsystems connected to the log fusion ends.

After obtaining the log data of each application end (each log subsystem), the log fusion end may perform multi-machine log data fusion based on time stamps in the log data, to facilitate application debugging, program running exception monitoring, and the like.

A log data fusion method is not limited in the disclosure. As an example, fusion may be performed based on the time stamps in the log data or based on log receiving time of the log fusion end. Those skilled in the art may design a proper log data fusion solution according to an actual requirement.

When obtaining the log data of each log subsystem, the log fusion end may further send a log output change instruction to the log subsystem through the DLT client, the DLT daemon, and the DLT log output unit.

After the log subsystem receives the log output change instruction, the log processing module performs one or more of the following operations: disabling a log output unit that runs; enabling a log output unit that does not run; setting an output mode of a basic log output unit; changing the output mode of the basic log output unit and the like.

Further, the disclosure further provides a vehicle log system. The vehicle log system is provided with the foregoing log system.

Preferably, with reference to the log system shown in FIG. 4, the application end is each vehicle domain controller of a new energy electric vehicle, and the log fusion end is a vehicle central controller (VCC) or a cloud server, or both a vehicle central controller and a cloud server are set as the log fusion end.

As an example, the application end 1 is an autonomous driving domain controller, the application end 2 is a cockpit domain controller, the application end n is a traction domain controller, the log fusion end 1 is the cloud server, and the log fusion end 2 is the vehicle central controller.

Using the vehicle log system of the disclosure in a test process of a vehicle can enable debugging personnel in the vehicle to view and analyze fused log data of each vehicle domain controller in real time through the vehicle central controller. In addition, another developer may obtain the fused log data of the entire vehicle in real time through the cloud server, and synchronously debug the vehicle or provide remote technical support for the debugging personnel in the vehicle, so that in-vehicle local debugging and cloud online debugging are collaboratively performed, which improves working efficiency

Further, the disclosure further provides a vehicle. The vehicle includes the foregoing log subsystem or the foregoing log system. Optionally, the vehicle is a new energy electric vehicle.

As an example, when the new energy electric vehicle includes the foregoing log system, the application end of the log system is each vehicle domain controller of the new energy electric vehicle, and the log fusion end is a vehicle central controller.

In addition, an application process in the vehicle domain controller of the new energy electric vehicle may also obtain log data in program running using the foregoing log subsystem independently.

Those skilled in the art should be able to realize that the method steps of the various examples described in conjunction with the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solutions. Those skilled in the art can implement the described functions by using different methods for each particular application, but such implementation should not be considered as going beyond the scope of the disclosure.

It should be noted that the terms "first", "second", and other ordinal numbers in the description, claims, and drawings of the disclosure are only intended to distinguish between similar objects, not to describe or indicate a particular order or sequence. It should be understood that the data termed in such a way are interchangeable in proper circumstances, so that this embodiment of the disclosure described herein can be implemented in other orders than the order illustrated or described herein.

In addition, in the descriptions of the disclosure, the term "A and/or B" represents all possible combinations of A and B, for example, only A, only B, or A and B.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A log subsystem, comprising:
a log generation module comprising one or more log generators, the log generator generating a log event;
a log processing module configured to perform the following operations:
adding basic log information to the log event to generate log data, and
configuring a log output unit based on a log output configuration file and/or a log output change interface; and
a log output module comprising one or more log output units, the log output unit comprising any one of a basic log output unit, an extended log output unit, and a third-party log output unit, wherein
the log generation module, the log processing module, and the log output module are set to run in a same program process.

2. The log subsystem according to claim 1, wherein the basic log output unit comprises a front-end unit, a first buffer, a second buffer, and a back-end unit, and the basic log output unit is configured to perform the following operation:
after the log subsystem starts running, the back-end unit being configured to enter a wait state;
the front-end unit being configured to perform the following operations:
writing the log data into the first buffer; and
when a log count of the first buffer is equal to a first data volume threshold, writing all the log data in the first buffer into the second buffer, and waking up the back-end unit; and
after the back-end unit is woken up, the back-end unit being configured to perform the following operations:
outputting all the log data in the second buffer in a preset output mode; and
entering the wait state again.

3. The log subsystem according to claim 2, wherein the output mode comprises a file output mode and a console output mode; and
when the output mode is set to the file output mode, the basic log output unit is set to a file log output unit; or
when the output mode is set to the console output mode, the basic log output unit is set to a console log output unit.

4. The log subsystem according to any one of claims 1 to 3, wherein after the log subsystem runs, the log processing module performs at least one of the following operations by invoking the log output change interface:
disabling a log output unit that runs;
enabling a log output unit that does not run;
setting an output mode of the basic log output unit; and
changing the output mode of the basic log output unit.

5. The log subsystem according to any one of claim 1 to 4, wherein the log subsystem further comprises:
the log processing module is set in a singleton pattern;
the third-party log output unit comprises a DLT log output unit;
the extended log output unit comprises an abstract base class for extending a log data application; and
the basic log information comprises at least one of a source file name, a code line count, a time stamp, and a PID of the log event.

6. A log system, comprising an application end and a log fusion end, wherein the application end comprises a log subsystem according to any one of claims 1 to 5 and a DLT daemon, there is one or more log subsystems, a log output module of each log subsystem comprises a DLT log output unit, and the DLT daemon is configured to obtain log data of the log subsystem through the DLT log output unit;
the log fusion end comprises a DLT client configured to obtain the log data of the log subsystem of the application end through the DLT daemon; and
there is one or more application ends and one or more log fusion ends.

7. The log system according to claim 6, wherein the log system further comprises:
the log fusion end is configured to send a log output change instruction to the log subsystem through the DLT client, the DLT daemon, and the DLT log; and
the log subsystem performs at least one of the following operations in response to the log output change instruction:
disabling a log output unit that runs;
enabling a log output unit that does not run;
setting an output mode of a basic log output unit; and
changing the output mode of the basic log output unit.

8. A vehicle log system, provided with a log system according to claim 6 or 7.

9. The vehicle log system according to claim 8, wherein the application end is a vehicle domain controller, and the log fusion end is a vehicle central controller and/or a cloud server.

10. A vehicle, provided with a log subsystem according to any one of claims 1 to 5, or
a log system according to claim 6 or 7, wherein the application end in the log system is a vehicle domain controller, and the log fusion end is a vehicle central controller.
